# EUROPÄISCHE PATENTSCHRIFT

(11) **EP 0 779 901 B1**
(45) Veröffentlichungstag und Bekanntmachung des Hinweises auf die Patenterteilung: **03.02.1999**
(21) Anmeldenummer: 95931982.3
(22) Anmeldetag: 04.09.1995
(51) Int. Cl.: C08F 210/02, C08F 4/34, C08F 4/52, C08F 2/34

(54) **VERFAHREN ZUR HERSTELLUNG VON ETHYLENE-COPOLYMEREN**
METHOD OF PREPARING ETHYLENE COPOLYMERS
PROCEDE DE FABRICATION DE COPOLYMERES D'ETHYLENE

(30) Priorität: 05.09.1994 DE 4431613
(43) Veröffentlichungstag der Anmeldung: 25.06.1997
(73) Patentinhaber: Peroxid-Chemie GmbH, 82049 Pullach (DE)
(72) Erfinder: LUFT, Gerhard, D-64367 Mühltal (DE); JABBARI, Majid, Hamadan (IR); DORN, Maximilian, D-82031 Grünwald (DE)
(74) Vertreter: Huber, Bernhard, Dipl.-Chem.
(86) Internationale Anmeldenummer: EP9503470
(87) Internationale Veröffentlichungsnummer: WO9607679

(56) Entgegenhaltungen:
- EP-A- 0 175 318
- EP-A- 0 475 124
- DE-A- 3 207 263
- FR-A- 1 298 155
- DATABASE WPI Section Ch, Week 7944 Derwent Publications Ltd., London, GB; Class A17, AN 79-80223B & JP,B,54 031 039 ( MITSUI PETROCHEM IND KK) , 4.Oktober 1979 in der Anmeldung erwähnt
- MACROMOLECULES, Bd. 10, Nr. 2, März 1977 - April 1977 Seiten 249-253, YATSU ET AL 'Copolymerization of Ethylene with Vinyl Acetate by Trialkylaluminum-Lewis Base-Peroxide Catalyst'
- DATABASE WPI Section Ch, Week 7542 Derwent Publications Ltd., London, GB; Class A18, AN 75-69460W & JP,A,49 124 190 ( MITSUI PETROCHEM KK) , 27.November 1974

## Beschreibung

Die Erfindung betrifft ein Verfahren zur Herstellung von Ethylen-Copolymeren unter erhöhtem Druck unter Verwendung eines Peroxid-Katalysators, sowie einen Katalysator zur Durchführung dieses Verfahrens.

Verfahren zur Polymerisation von ethylenisch ungesättigten Monomeren unter erhöhtem Druck und erhöhter Temperatur in Gegenwart eines Peroxid-Katalysators sind bekannt.

Die DE-A-3322329 beschreibt ein Verfahren zur Herstellung von Polyethylen durch Polymerisation von Ethylen und einem mischpolymerisierbaren Monomeren in Gegenwart eines Katalysators aus einem Übergangsmetall derivat und einem Organoaluminiumderivat, bei dem ein organisches Peroxid dem Polymerisationsprodukt bei der Ausleitung aus der Reaktionszone zugegeben wird, um dadurch den restlichen Katalysator zu deaktivieren.

Die JP-B-79031039 beschreibt die (Co)Polymerisation aliphatischer α-Olefine unter Verwendung eines Katalysatorsystems, das aus Trialkylaluminium, einem Elektronendonator und einem Peroxid besteht.

D.Yatsu et al., American Chemical Society, Division of Polymer Chemistry, Polymer Reprints, Vol.16, Nr.1, April 1975, Seiten 373 bis 378 beschreiben die Copolymerisation von Ethylen und Vinylacetat in Gegenwart eines Dreikomponenten-Katalysatorsystems aus AlEt₃, einer Lewis-Base und einem Peroxid.

NL-A-268 250 beschreibt eine Niederdruck-Copolymerisation von Olefinen mit 2-4 C-Atomen mit einem Vinylester. Das Verfahren wird bei einem Druck < 70 atü und bei einer Temperatur von -80 bis + 60 °C durchgeführt. Als Katalysator wird ein Gemisch aus einem Peroxid und einer Organoaluminiumverbindung verwendet.

Aufgabe der vorliegenden Erfindung ist es, ein wirtschaftliches Verfahren zur Copolymerisation von Ethylen und weiteren polymerisierbaren Monomeren in Gegenwart eines Peroxid-Katalysators bei hohen Drücken und einer hohen Temperatur bereitzustellen, mit dem eine Verbesserung der Polymerausbeute pro Gewichtseinheit an eingesetztem Peroxid erzielt werden kann.

Diese Aufgabe wird erfindungsgemäß gelöst durch ein Verfahren zur Herstellung von Ethylen-Copolymeren unter erhöhtem Druck in Gegenwart eines Peroxid-Katalysators, das dadurch gekennzeichnet ist, daß man als Katalysator ein Katalysatorsystem aus den Komponenten (A) und (B) verwendet, worin
die Komponente (A) mindestens eine Organoaluminiumverbindung der Formel AlR₃ darstellt, worin R gleich oder verschieden sein kann und eine Alkyl-, Alkenyl-, Aryl-, Aralkyl- oder Cycloalkylgruppe ist; und
die Komponente (B) mindestens ein organisches Peroxid darstellt und die Polymerisation bei einem Druck von ≥ 300 bar und bei einer Temperatur ≥ 80°C durchgeführt wird.

Bevorzugte Ausführungsformen dieses Verfahrens sind Gegenstand der Ansprüche 2 bis 4.

Ein weiterer Gegenstand der Erfindung ist die Verwendung eines Katalysatorsystem in einem Hochdruckpolymerisationsverfahren zur Herstellung von Ethylen-copolymeren durch Polymerisation von Ethylen mit weiteren polymerisierbaren Monomeren, bei einem Druck von > 300 bar, das dadurch gekennzeichnet ist, daß es aus den Komponenten (A) und (B) besteht, worin die Komponente (A) mindestens eine Verbindung, ausgewählt aus der Gruppe der Organoaluminiumverbindungen der Formel AlR₃ darstellt, worin R gleich oder verschieden sein kann und eine Alkyl-, Alkenyl-, Aryl- oder Cycloalkylgruppe ist; und
die Komponente (B) mindestens ein organisches Peroxid darstellt.

Zweckmäßige Ausführungsformen dieses Katalysatorsystems sind Gegenstand der Ansprüche 8 bis 10.

Vorzugsweise wird die Polymerisation bei einem Druck von ≥ 500 bar, und insbesondere zwischen 1500 und 2500 bar durchgeführt. Die Polymerisationstemperatur liegt vorzugsweise zwischen 80 und 300°C, und insbesondere zwischen 100 und 250°C.

Das Mengenverhältnis von Katalysatorgemisch zu Monomer beträgt vorzugsweise 10-250 Mol Katalysator (A und B) pro 10⁶ Mol Monomerengemisch und besonders bevorzugt 50-150 Mol Katalysator pro 10⁶ Mol Monomerengemisch.

Als Comonomere sind im erfindungsgemäßen Verfahren alle mit Ethylen copolymerisierbaren Monomere geeignet. Die folgende Aufstellung zeigt einige Beispiele für solche polymerisierbaren Monomere.
A) Acryl- und Methacrylverbindungen
   z.B. Acrylsäure und Methacrylsäure
   Acrylsäure- und Methacrylsäurealkylester (Methylacrylat, Ethylacrylat, Propylacrylat, Isopropylacrylat, n-Butylacrylat, tert.- Butylacrylat, 2-Ethylhexylacrylat, Stearylacrylat und die entsprechenden Methacrylsäurehydroxyalkylester, Acrylsäure- und Methacrylsäureester,
   2-Hydroxyethylacrylat
   2-Hydroxypropylacrylat
   4-Hydroxybutylacrylat und die entsprechenden Methacrylsäureester,
   Acryl- und/oder Methacrylsäureallylester Methylenbisacrylamid
   Acryl- und Methacrylsäurevinylester
   Acrylnitril und Methacrylnitril
   Acrylamid und Methacrylamid
B) Polymerisierbare Vinyl- und Vinylidenverbindungen
   z.B. Styrol
   kernchlorierte und alkylierte bzw.
   alkenylierte Styrole (Vinyltoluol, Divinylbenzol, alpha-Methylstyrol, tert.-Butylstyrol, Chlorstyrole)
   Vinylester von Carbonsäuren mit 2 bis 6 Kohlenstoffatomen (Vinylacetat)
   Vinylether (Vinylpropylether, Vinylisobutylether)
   Maleinsäureanhydrid
   Maleinsäurehalbester mit 1 bis 4 Kohlenstoffatomen in der Alkoholkomponente
   Maleinsäurediester
   Maleinsäurehalbimide
   Maleinsäurediimide oder cyclische Imide (N-Methylmaleinimid, N-Cyclohexylmaleinimid)
   Allylverbindungen
   Allylbenzol
   Allylester
   (Allylacetat, Phthalsäurediallylester, Isophthalsäurediallylester, Malein- und Fumarsäurediallylester, Allylcarbonat, Diallylcarbonate, Diallylphenylcarbonate, Triallylphosphat, Triallylcyanurat und -isocyanurat)
   Ethylenglykoldiallylether
   Vinylpyrrolidon
   Vinylchlorid
   Vinylidenchlorid
C) Konjugierte Diene
   z.B. Butadien
   Isopren
   Chloropren

Bevorzugt wird im erfindungsgemäßen Verfahren als Comonomer Vinyl-acetat oder/und Acrylsäuremethylester verwendet.

Die Copolymerisation kann auf einer für die Copolymerisation von Ethylen mit weiteren polymerisierbaren Monomeren in Gegenwart eines Katalysators, insbesondere in Gegenwart eines Peroxid-Katalysators an sich bekannten Weise erfolgen und das Polymer auf an sich bekannte Weise isoliert werden. Im allgemeinen erfolgt die Polymerisation in Masse, sie kann aber auch in einem Lösungsmittel, also als Lösungspolymerisation durchgeführt werden.

Überraschenderweise wurde gefunden, daß unter Verwendung des erfindungsgemäßen Katalysatorsystems der Peroxidverbrauch in der durch organische Peroxide initiierten Copolymerisation von Ethylen mit weiteren polymerisierbaren Monomeren gesenkt werden kann, d.h. die Polymerausbeute pro Gewichtseinheit Peroxid kann erheblich verbessert werden.

Das aus den Katalysatorkomponenten (A) und (B) bestehende Katalysatorsystem wird den Monomeren in Substanz oder Lösung zugeführt, wobei die Zudosierung der einzelnen Katalysatorkomponenten (A) und (B) gemischt oder getrennt erfolgen kann. Die Katalysatorkomponenten können dabei auf einmal in die Reaktionszone eingespeist werden, oder aber kontinuierlich in geringer Konzentration; insbesondere je nach der Art der Polymerisation als Massen- oder Lösungspolymerisation können die Komponenten als solche oder in Lösung zugegeben werden. Bei Zugabe in Lösung wird als Lösungsmittel vorzugsweise das gleiche Lösungsmittel wie für die Lösungspolymerisation verwendet.

Die Reaktion kann kontinuierlich oder diskontinuierlich durchgeführt werden. Als Reaktortypen kommen die für eine derartige Polymerisation an sich bekannten Reaktortypen in Frage, wie z.B. Strömungsrohr, Rührkessel, Rührkesselkaskade und ähnliche Reaktortypen.

Es ist bei dem erfindungsgemäßen Verfahren außerdem möglich, der Reaktionsmischung weitere gewünschte Zusätze, insbesondere Molekulargewichtsregler, zuzusetzen.

Als Lösungsmittel für die Lösungspolymerisation können ebenfalls für eine derartige Polymerisation an sich bekannte Lösungsmittel verwendet werden. Vorzugsweise werden aliphatische oder alicyclische gesättigte Kohlenwasserstoffe, wie z.B. Hexan, Heptan, Octan, Cyclohexan, Isododecan, oder Mischungen solcher gesättigten Kohlenwasserstoffe verwendet, wie z.B. Petrolether, Kerosin oder Dekalin. Diese Lösungsmittel werden vorzugsweise auch als Lösungsmittel für die Katalysatorkomponenten des erfindungsgemäß verwendeten Katalysatorsystems eingesetzt.

In der Katalysatorkomponente (A) bedeutet der Rest R eine Alkyl-, Alkenylgruppe mit vorzugsweise 1 bis 30, besonders bevorzugt 1 bis 14 und am meisten bevorzugt 1-7 Kohlenstoffatomen oder eine Aryl-, Aralkyl- oder Cycloalkylgruppe mit vorzugsweise 5 bis 20 Kohlenstoffatomen. Typische Beispiele für die Reste R sind Alkylgruppen, z.B. Methyl-, Ethyl-, Butyl-, Hexyl-, Heptyl-, Octyl-, Dodecyl-, aber auch höhere, insbesondere lineare Alkylgruppen; Alkenylgruppen, wie z.B. Allyl; gegebenenfalls substituierte Arylgruppen, wie z.B. Phenyl oder Tolyl; Aralkylgruppen, wie z.B.Benzyl; und Cycloalkylgruppen, wie z.B. Cyclohexyl.

Als typische Beispiele der Organoaluminiumverbindungen AlR₃ können genannt werden Trimethyl-, Triethyl-, Tributyl-, Trihexyl-, Trioctyl-, Tridodecyl-, Triphenyl-, Tritolyl- oder Tribenzylaluminium, und gemischte Organoaluminiumverbindungen, wie beispielsweise eine Mischung aus Triethyl- und Tributylaluminium, oder aus Triethyl- und Tribenzylaluminium.

Die Verbindungen der Komponenten (A) und die Peroxide der Komponente (B) können alleine oder in Mischung von 2 oder mehreren Komponenten der gleichen Gruppe, und/oder auch als Mischung einer oder mehrerer Komponenten der gleichen Gruppe mit einer oder mehreren Komponenten der anderen Gruppe eingesetzt werden.

Als organisches Peroxid der Katalysatorkomponente (B) wird vorzugsweise ein solches verwendet, wie es zur Initiierung derartiger Polymerisationsreaktionen von α-Olefinen bekannt ist. Bevorzugt werden Diacylperoxide mit 4 bis 18 Kohlenstoffatomen und Perester mit 5 bis 15 Kohlenstoffatomen eingesetzt. Als typische Beispiele für Diacylperoxide können genannt werden Isobutyrylperoxid, Lauroylperoxid und Benzoylperoxid; als Beispiele für Perester können genannt werden tert.-Butylperpivalat, tert.-Butylperneodecanoat und tert.-Butylper-2-ethylhexanoat. Auch Peroxymonocarbonate, wie z.B. tert.-Butylperoxyethylhexylcarbonat, haben sich für das erfindungsgemäße Verfahren als gut geeignet erwiesen.

Nach dem erfindungsgemäßen Verfahren hergestellte Ethylen-Copolymere können für alle Verwendungszwecke solcher Copolymere eingesetzt werden.

Die folgenden Beispiele sollen nun die Erfindung näher erläutern, ohne sie darauf zu beschränken. In den Beispielen werden die folgenden Abkürzungen verwendet:
- TBPPI:: tert.Butylperpivalat
- TBPEH:: tert.-Butylper-2-ethylhexanoat
- TEA:: Triethylaluminium
- TDDA:: Tridodecylaluminium
- E:: Ethylen
- VA:: Vinylacetat
- MA:: Methylacrylat
- U:: Umsatz

### Beispiel 1

Die Reaktion wurde in einem kontinuierlich betriebenen Rührkesselautoklaven durchgeführt, dessen Rührer aus 2 Propellern bestand, deren Flügel gegeneinander verdreht waren. Die Beheizung erfolgte durch Induktion. Die Reaktionstemperatur wurde über ein Thermoelement verfolgt. Die Druckregelung erfolgte mittels PID-Regelung. Es wurde eine Lösung von Triethylaluminium in absolutem Heptan (4 Gew.-%) eingesetzt, und als Peroxidverbindung tert.-Butylperpivalat in absolutem Heptan (2 Gew.-%). Die Lösungen der Komponenten wurden über Spindelkolbenpumpen in das Reaktionsgefäß eindosiert. Vorher wurden alle Anlagenteile gründlich mit Argon befüllt. Das Ethylen wurde ohne Lösungsmittel über einen Gaskompressor zudosiert. Das Vinylacetat wurde unverdünnt mittels einer Membranpumpe zudosiert.

Durch die gleichzeitige Eindosierung der Monomeren und der Lösungen der Katalysatorkomponenten wurde die Reaktion gestartet. Die Massenströme der einzelnen Edukte betrugen für das Ethylen 0,2038 g/s, für Vinylacetat 0,0304 g/s, für das tert.Butylperpivalat 6,635 x 10⁻⁵ g/s und für das Triethylaluminium 2,175 x 10⁻⁵ g/s.

Es wurde bei einer Reaktionstemperatur von 136°C, einem Reaktionsdruck von 1900 bar und einer mittleren Verweilzeit von 40 sec gearbeitet. Die Reaktion wurde 20 min lang geführt. Das Produkt der letzten 10 min wurde aufgefangen und im Vakuum getrocknet. Der Umsatz bezogen auf die eingesetzten Monomeren betrug 19%.

### Beispiele 2 bis 9

Es wurde wie im Beispiel 1 angegeben gearbeitet, wobei Katalysatorkomponenten (A) und (B) und Polymerisationsbedingungen, wie sie in der nachstehenden Tabelle 1 angegeben sind, verwendet wurden. Die erhaltenen Ergebnisse sind ebenfalls in der Tabelle 1 angegeben.

Wenn nicht anders angegeben, wurde unter den folgenden Reaktionsbedingungen gearbeitet:

Die Peroxide wurden in einer Lösung in absolutem Heptan (2 Gew.-%) eingesetzt und dem Polymerisationsgefäß bei einer Konzentration von 50 molppm kontinuierlich zugegeben.

Die Organoaluminiumverbindungen wurden in Lösung in absolutem Heptan (4 Gew.-%) eingesetzt.

Die Angaben in Mol beziehen sich auf das eingesetzte Monomer.

Die mittlere Verweilzeit betrug 40 sec.

### Beispiel 10

Im Vergleichsbeispiel 10 wurde wie für Beispiele 2 bis 9 beschrieben aber ohne Katalysatorkomponente (A) gearbeitet.

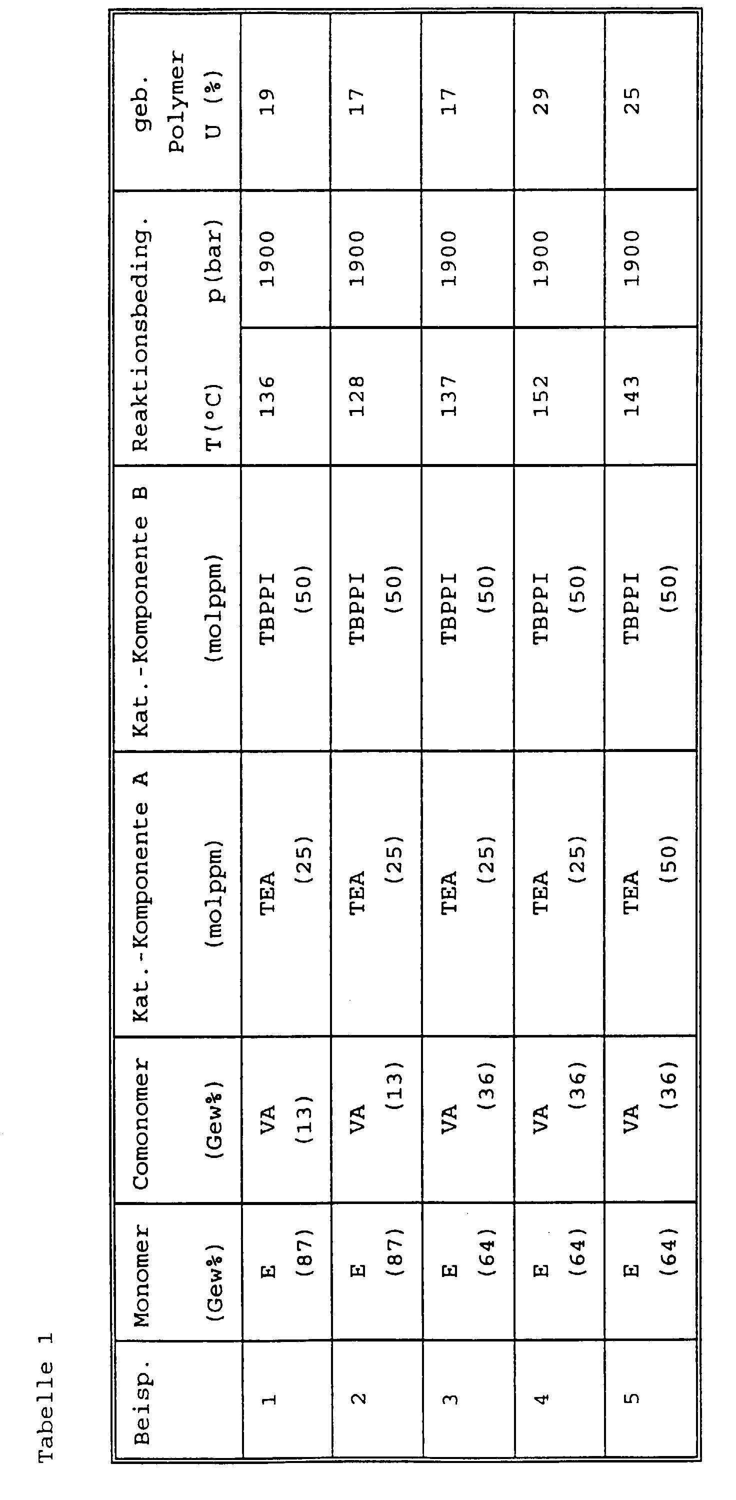

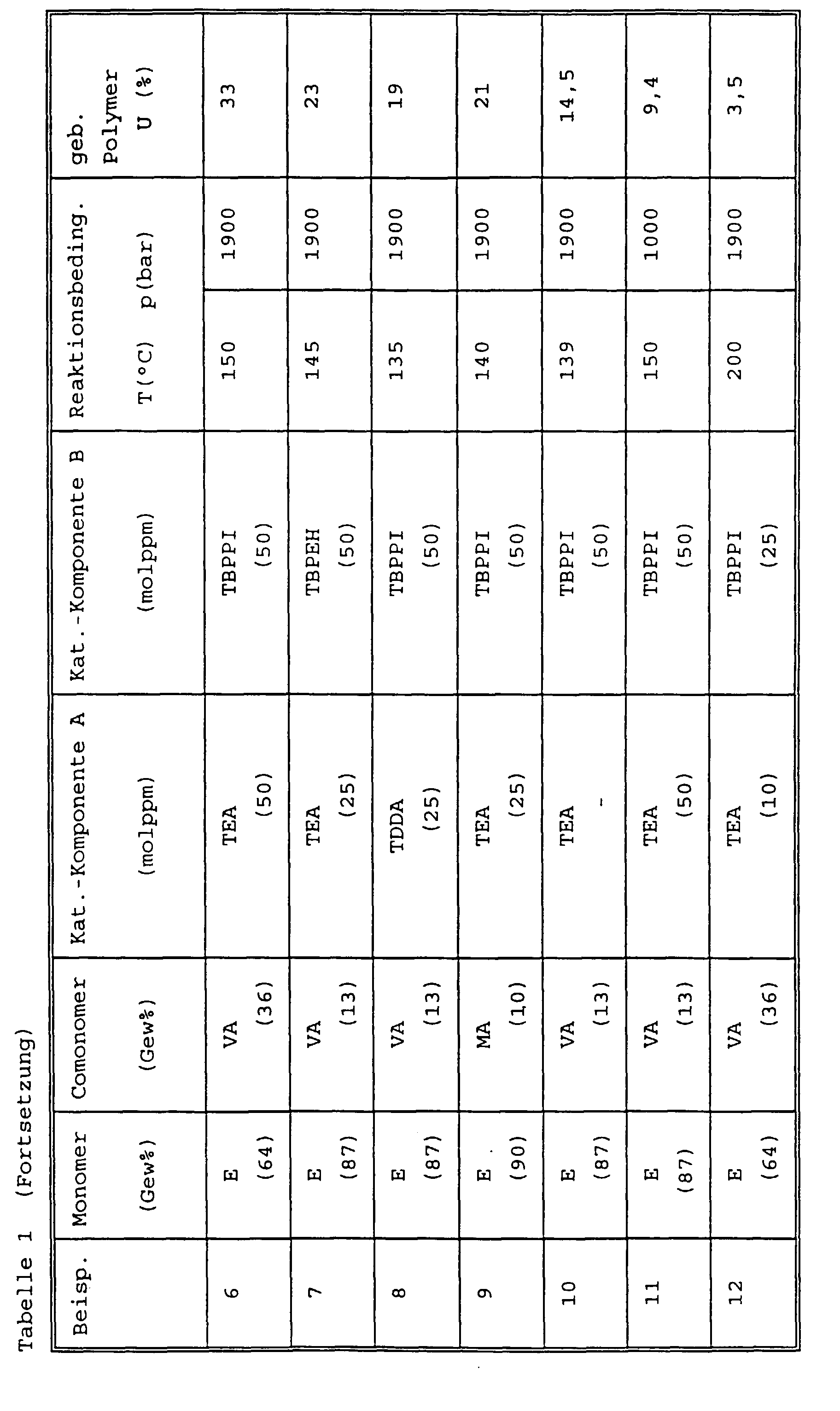

## Patentansprüche

1. Verfahren zur Herstellung von Ethylen-Copolymeren durch Polymerisation von Ethylen und weiteren polymerisierbaren Monomeren in Gegenwart eines Peroxid-Katalysators, dadurch gekennzeichnet, daß man als Katalysator ein Katalysatorsystem aus den Komponenten (A) und (B) verwendet, worin
die Komponente (A) mindestens eine Organoaluminiumverbindung der Formel AlR₃ darstellt, worin R gleich oder verschieden sein kann und eine Alkyl-, Alkenyl-, Aryl-, Aralkyl- oder Cycloalkylgruppe ist; und
die Komponente (B) mindestens ein organisches Peroxid darstellt
und die Polymerisation bei einem Druck von ≥ 300 bar und bei einer Temperatur 80°C durchgeführt wird.

2. Verfahren nach Anspruch 1,
**dadurch gekennzeichnet,**
daß man als Comonomere Vinylacetat oder/und Acrylsäuremethylester verwendet.

3. Verfahren nach Anspruch 1 oder 2,
**dadurch gekennzeichnet,**
daß man die Polymerisation bei einem Druck von ≥ 500 bar, vorzugsweise 1500 bis 2500 bar, und einer Temperatur zwischen 80 und 300°C, vorzugsweise 100 bis 250°C, durchführt.

4. Verfahren nach einem der vorhergehenden Ansprüche,
**dadurch gekennzeichnet,**
daß die Menge der Komponente (B) 0.01 bis 100 Mol pro Mol der Komponente (A) beträgt.

5. Verwendung eines Katalysatorsystems in einem Verfahren zur Herstellung von Ethylen-Copolymeren durch Polymerisation von Ethylen mit weiteren polymerisierbaren Monomeren bei einem Druck von > 300 bar,
**dadurch gekennzeichnet,**
daß es aus den Komponenten (A) und (B) besteht, worin
die Komponente (A) mindestens eine Verbindung ausgewählt aus der Gruppe der Organoaluminiumverbindungen der Formel AlR₃ darstellt, worin R eine Alkyl-, Alkenyl-, Aryl- oder Cycloalkylgruppe ist; und
die Komponente (B) mindestens ein organisches Peroxid darstellt.

6. Verwendung nach Anspruch 5,
**dadurch gekennzeichnet,**
daß die Menge der Komponente (B) 0.01 bis 100 Mol pro Mol der Komponente (A) beträgt.

7. Verwendung nach Anspruch 5,
**dadurch gekennzeichnet,**
daß das Mengenverhältnis von Katalysatorgemisch zu Monomer 10 bis 250 Mol Katalysator pro 10⁻⁶ Mol Monomerengemisch beträgt.

## Claims

1. Process for the production of ethylene co-polymers by polymerisation of ethylene and additional polymerisable monomers in the presence of a peroxide catalyst,
**wherein**
a catalyst system comprising components (A) and (B) is used as the catalyst, in which component (A) represents at least one organo-aluminium compound of formula AlR₃, in which R can be the same or different and is an alkyl, alkenyl, aryl, aralkyl or cycloalkyl group, and component (B) represents at least one organic peroxide, and the polymerisation is carried out at a pressure of ≥ 300 bar and at a temperature of ≥ 80°C.

2. Process as claimed in claim 1,
**wherein**
vinyl acetate or/and methyl acrylate are used as co-monomers.

3. Process as claimed in claim 1 or 2,
**wherein**
the polymerisation is carried out at a pressure of ≥ 500 bar, preferably 1500 to 2500 bar and at a temperature of between 80 and 300°C, preferably 100 to 250°C.

4. Process as claimed in one of the previous claims,
**wherein**
the amount of component (B) is 0.01 to 100 moles per mole of component (A).

5. Use of a catalyst system in a process for the production of ethylene co-polymers by polymerisation of ethylene with additional polymerisable monomers at a pressure of > 300 bar,
**wherein**
it is composed of components (A) and (B), in which component (A) is at least one compound selected from the group of organo-aluminium compounds of formula AlR₃, in which R is an alkyl, alkenyl, aryl or cycloalkyl group, and component (B) represents at least one organic peroxide.

6. Use as claimed in claim 5,
**wherein**
the amount of component (B) is 0.01 to 100 moles per mole of component (A).

7. Use as claimed in claim 5,
**wherein**
the quantitative ratio of catalyst mixture to monomer is 10 to 250 moles per 10-6 moles of monomer mixture.

## Revendications

1. Procédé pour la préparation de copolymère d'éthylène par polymérisation d'éthylène et d'autres monomères polymérisables en présence d'un catalyseur peroxyde, caractérisé en ce qu'en tant que catalyseur on utilise un système de catalyseur constitué par les composants (A) et (B), dans lequel procédé
le composant (A) représente au moins un composé organoaluminium de la formule AlR₃, dans laquelle R peut être identique ou différent et représente un groupe alkyle, alcényle, aryle, aralkyle ou cycloalkyle; et
le composant (B) représente au moins un peroxyde organique et la polymérisation est conduite à une pression de ≥ 300 bars et à une température ≥ 80°C.

2. Procédé selon la revendication 1, caractérisé en ce qu'en tant que comonomère, on utilise un acétate de vinyle et/ou un méthyle ester de l'acide acrylique.

3. Procédé selon la revendication 1 ou 2, caractérisé en ce que
on conduit la polymérisation à une pression de ≥ 500 bars, de préférence 1500 à 2500 bars, et à une température entre 80 et 300°C, de préférence 100 à 250°C.

4. Procédé selon l'une des revendications précédentes, caractérisé en ce que la quantité du composant (B) est de 0,01 à 100 moles par mole du composant (A).

5. Utilisation d'un système de catalyseur dans un procédé pour la préparation de copolymère d'éthylène par polymérisation d'éthylène avec d'autres monomères polymérisables à une pression de > à 300 bars,
caractérisé en ce qu'il est constitué par les composants (A) et (B), le composant (A) représentant au moins un composé choisi dans le groupe des composés organoaluminium de la formule AlR₃, où R est un groupe alkyle, alcényle, aryle ou cycloalkyle; et
le composant (B) représente au moins un peroxyde organique.

6. Utilisation selon la revendication 5, caractérisée en ce que la quantité du composant (B) est de 0,01 à 100 moles par mole du composant (A).

7. Utilisation selon la revendication 5, caractérisée en ce que le rapport quantitatif entre le mélange de catalyseur et le monomère est de 10 à 250 moles de catalyseur pour 10⁻⁶ moles de mélange de monomère.
